# EUROPEAN PATENT APPLICATION

(11) **EP 0 534 509 A2**
(43) Date of publication of application: **31.03.1993**
(21) Application number: 92201855.1
(22) Date of filing: 24.06.1992
(51) Int. Cl.: F21Q 3/00, F21V 15/00

(54) **Signal light**

(30) Priority: 25.09.1991 BE 9100889
(71) Applicant: DHOLLANDIA, naamloze vennootschap, B-9111 Belsele (BE)
(72) Inventor: Dhollander, Omer, B-9111 Belsele (BE)
(74) Representative: Donné, Eddy

(57) **Abstract**

Signal light which comprises an electrical light source (3) and a housing therefor (1,2) with an at least partially light transmitting shell (2) made of synthetic material, characterized in that the space inside the shell (2) is filled with a core (1) of light transmitting synthetic material in which the light source (3) is embedded.

## Description

The invention relates to a signal light which contains an electrical light source and a housing therefor with an at least partially light transmitting synthetic shell.

With known signal lights of this type, the housing is a hollow shell which is attached to a base, whereby the space between the shell and the base and thus around the light source is empty. For that reason, the danger of breaking the shell is very big, especially if the signal lights are used with vehicles such as lorries, trailers, yard wagons etc. Wilful or unwilful damage of the signal lights, which are for instance used to indicate presence of the vehicle or a change of driving direction, take therefore often place.

Moreover, the intrusion of moisture between the shell and the base is not always excluded. This intruding moisture can interfere with the working of the signal light and causes corrosion of the metal parts of the signal light.

The invention has as an aim to remedy these disadvantages and to provide a signal light which is practically unbreakable and in which corrosion is almost excluded.

To this end, the space inside the shell is filled with a core of light transmitting synthetic material in which the light source is embedded.

Because the space under the shell is filled with synthetic material, the whole is rather solid and resistant against shocks, pushes, collisions, etc. and it is impossible for moisture to intrude.

In a preferred embodiment of the invention, the light source is a shock-proof light emitting diode.

By not using light bulbs which are subject to wear and tear and which can break due to shocks, the reliability and life of signal light are enhanced, and the chances of the light source breaking is reduced. Moreover, the wave length of the light to be emitted by the diode is about 650 nanometre, which is ideal for signalization.

In a special embodiment of the invention, the signal light is a flashing light and the components causing the flashing are also embedded in the synthetic material.

In an advantageous embodiment of the invention, the signal light has the form of a segment of a sphere.

In this embodiment, the fragility is minimal and the signal light can even be mounted in a floor and among other places in a tail board of a lorry. Stepping on it or driving over it with a fork lift or the like is possible without damaging the signal light.

In order to better show the characteristics of the invention, two preferred embodiments are described hereafter, as examples and without any limitative character, reference being made to the accompanying drawings, wherein:
figure 1 represents a top down view of a signal light according to the invention;
figure 2 represents a side view of the signal light of figure 1;
figure 3 represents a front view of the signal light of figures 1 and 2;
figure 4 represents a cross-section according to line IV-IV in figure 1;
figure 5 represents a cross-section according to line V-V in figure 1;
figure 6 represents a schematic perspective view of the rear of a lorry with an opened tail board, on which tail board two signal lights of the preceding figures are mounted.

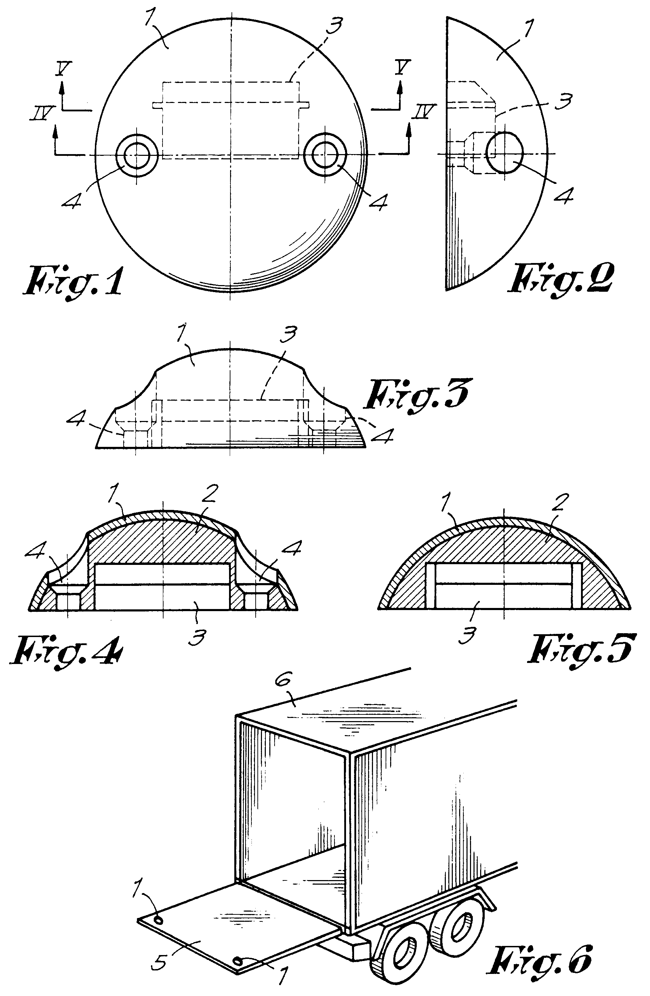

The signal light according to figures 1 to 5 mainly consists of a core 1 of light transmitting two components epoxy resin, a shell 2 made of polycarbonate covering the core 1 and a light emitting diode 3 embedded in the core 1.

The shell 2 is shaped as part of a sphere surface and the core 1 totally fills the shell 2. The whole signal light is thus shaped as a circle segment. For a largest diameter of nearly eight centimetres, the height of the sphere segment is about three centimetres.

The polycarbonate of which the shell 2 is made, has the property of being 250 times more shock-resistant than glass. The solidity and shock-resistance of the shell are even more enhanced by the fact that the inside of the shell is not empty but filled with the epoxy resin of the core 1. This polycarbonate is coloured in the required colour, for instance orange or red. The shell 2 can also be made in two colours and part of it can even be made opaque.

The light emitting diode 3 is a connection which is completely embedded in a transparent aluminium gallium arsenide substrate which resists to temperatures between -55° Centigrade and +100° Centigrade and is completely shock-proof and shock-resistant. The wave length of the diode is about 650 nanometre, which is ideal for signalization.

By replacing a normal light emitting diode by a flashing light emitting diode (a so-called pinkled) in combination with other light emitting diodes and embedding it in the core 1, a flashing light is obtained without need of an external flashing mechanism or other incorporated electronic components which are necessary to obtain a flashing effect.

Two openings 4 for attachment screws are provided through the core 1. At the side of the shell 2 these openings are larger in order to allow the countersinking of the head of the screws.

The manufacture of the above-described signal lights is very simple and happens as follows:
The two components of the epoxy resin are mixed, namely the non-polymerized resin and a hardener, and the mixture is poured, while it still has a normal viscosity, in the shell 2 the inside of which is turned upwards. The light emitting diode 3 or, in the embodiment as flashing light, all diodes is, respectively are, placed in the epoxy resin. After about ten minutes, due to the chemical reaction between resin and hardener, the temperature has risen to about 50 degrees Centigrade. Thus a good fixation of the resin with the polycarbonate of the shell 2 and with the embedded diode 3 or all diodes is obtained, and the viscosity of the epoxy resin is lowered so that air bubbles raise to the surface and a perfect sealing of the whole is obtained.

The above-described signal lights are not only relatively cheap but especially of an exceptional mechanical solidity and practically unbreakable. Infiltration of gases or liquids in the signal light is excluded, so that corrosion is also excluded.

A very interesting application, but of course not the only one, which is possible due to the great mechanical strength, is represented in figure 6. Two flashing signal lights as described above are mounted on the inside of a hydraulic tail board 5 of a lorry 6. The signal lights are mounted in the circuit of the lorry in such a way that, as soon as the tail board 5 opens and as long as it remains open, the signal lights flash. The use of normal signal lights is impossible in such an application, since the tail board is driven on by different means of transportation. Applying a mechanical protection around these normal signal lights is not possible since normally the entire surface of the tail board must be driven on. The signal light according to the invention, however, is resistant to driving over it or walking over it, without mechanical protection.

The present invention is in no way limited to the embodiments described above and represented in the drawings, but such signal lights can be realized in different forms and dimensions without leaving the scope of the invention.

## Claims

1. Signal light which comprises an electrical light source (3) and a housing therefor (1,2) with an at least partially light transmitting shell (2) made of synthetic material, characterized in that the space inside the shell (2) is filled with a core (1) of light transmitting synthetic material in which the light source (3) is embedded.

2. Signal light according to the preceding claim, characterized in that the light source (3) is a shock-proof light emitting diode.

3. Signal light according to the preceding claim, characterized in that the light emitting diode (3) is a connection embedded in an aluminium gallium arsenide substrate.

4. Signal light according to one of the preceding claims, characterized in that it is a flashing light and in that the components causing the flashing are also embedded in the core (1) of synthetic material.

5. Signal light according to the preceding claim, characterized in that the components causing the flashing consist of the light emitting diode (3) itself which is a flashing diode in combination with other light emitting diodes.

6. Signal light according to one of the preceding claims, characterized in that the shell (2) is made of polycarbonate.

7. Signal light according to one of the preceding claims, characterized in that the core (1) is made of a two components epoxy resin.

8. Signal light according to one of the preceding claims, characterized in that it is shaped as a sphere segment.

9. Signal light according to the preceding claim, characterized in that the sphere segment has a height of nearly three centimetres.

10. Signal light according to one of the preceding claims, characterized in that it is mounted on the tail board (5) of a lorry (6).
